# EUROPÄISCHE PATENTSCHRIFT

(11) **EP 3 362 329 B1**
(45) Veröffentlichungstag und Bekanntmachung des Hinweises auf die Patenterteilung: **19.02.2020**
(21) Anmeldenummer: 16779145.8
(22) Anmeldetag: 12.10.2016
(51) Int. Cl.: B60S 3/00, B60S 3/04, B05B 1/26, B05B 7/00

(54) **FAHRZEUGWASCHANLAGE**
VEHICLE WASHING SYSTEM
INSTALLATION DE LAVAGE DE VÉHICULES

(30) Priorität: 12.10.2015 DE 102015013095
(43) Veröffentlichungstag der Anmeldung: 22.08.2018
(60) Teilanmeldung: 19203115.1
(73) Patentinhaber: WashTec Holding GmbH, 86153 Augsburg (DE)
(72) Erfinder: LINDER, Thomas, 86465 Welden (DE)
(74) Vertreter: Reitstötter Kinzebach
(86) Internationale Anmeldenummer: PCT/EP2016/074488
(87) Internationale Veröffentlichungsnummer: WO 2017/064128

(56) Entgegenhaltungen:
- DE-A1- 19 542 855
- JP-A- 2002 046 582
- US-A- 4 912 782
- US-A1- 2013 192 643
- US-A1- 2015 274 134

## Beschreibung

Die Erfindung betrifft eine Fahrzeugwaschanlage nach dem Oberbegriff des Anspruchs 1.

Bei bekannten Fahrzeugwaschanlagen wird über eine Auftragsvorrichtung Schaum auf das Fahrzeug aufgetragen und anschließend, bevorzugt mit Waschbürsten, das Fahrzeug gereinigt. Dabei ist es bekannt, den Schaum in Form eines sogenannten Schaumvorhangs auf das Fahrzeug aufzutragen, um eine gleichmäßige Benetzung der Fahrzeugoberflächen zu erreichen und dem Benutzer einen optisch ansprechenden Eindruck zu vermitteln. Hierzu werden üblicherweise fest an einem Waschportal oder Portalrahmen einer Waschstraße angeordnete Sprührohre verwendet.

Ein Beispiel hierfür ist in der US 2010/0154844 A1 offenbart, welche ein Waschportal zeigt, an dem ein einziges, über die Portalsäulen und die Portaltraverse verlaufendes Sprührohr mit daran angeordneten Sprühdüsen vorgesehen ist. Dabei hat sich herausgestellt, dass sich der Schaumvorhang bei einer zu großen Fallhöhe vor dem Auftreffen auf der Fahrzeugoberfläche auflöst und zerreißt. Hierdurch werden zum einen die Fahrzeugoberflächen ungleichmäßig mit Schaum benetzt, und andererseits ergibt dies für den Benutzer ein optisch wenig ansprechendes Bild.

Aus der JP 2002 046582 A ist eine Waschanlage bekannt, bei welcher Schaum erzeugt und auf ein Fahrzeug von oben aufgebracht wird. Hierfür sind drei Düsen vorgesehen.

Die US 4 912 782 A beschreibt eine Armatur für eine Badewanne für den Flüssigkeitsaustritt. Bei dieser Armatur tritt Wasser in einer Zone durch kleine Öffnungen nach oben aus und wird dann durch ein gebogenes Element umgelenkt.

Es ist Aufgabe der vorliegenden Erfindung, die oben genannten Nachteile zu überwinden und eine Fahrzeugwaschanlage sowie ein Verfahren zum Reinigen eines Fahrzeugs bereitzustellen, die einen verbesserten Schaumauftrag ermöglichen.

Diese Aufgabe wird erfindungsgemäß durch eine Fahrzeugwaschanlage mit den Merkmalen des Anspruchs 1 gelöst. Weitere Ausgestaltungen der erfindungsgemäßen Fahrzeugwaschanlage ergeben sich aus den abhängigen Ansprüchen.

Die Aufgabe wird gelöst, indem bei einer Fahrzeugwaschanlage zum Reinigen eines Fahrzeugs, die einem entlang eines Waschbereichs verfahrbaren Träger und eine Schaumabgabevorrichtung zur Erzeugung eines quer zur Fahrtrichtung des Trägers ausgedehnten Schaumvorhangs umfasst, die Schaumabgabevorrichtung höhenverstellbar an dem Träger angeordnet ist.

Um den Schaum über die gesamte Breite eines zu reinigenden Fahrzeugs zu verteilen, kann die Schaumabgabevorrichtung einen Schaumkanal mit mehreren quer zur Fahrtrichtung (L) des Trägers beabstandeten Schaumauslässen umfassen.

Zu einer gleichmäßigen Verteilung des Schaums quer zur Fahrtrichtung des Trägers trägt erfindungsgemäß ferner bei, dass die Schaumabgabevorrichtung wenigstens einen Schaumauslass, aus dem Schaum unter Druck austritt, und eine dem Schaumauslass zugewandte Prallfläche zum Auffangen und Ableiten des austretenden Schaums umfasst. Der Strahl des austretenden Schaums, wenn er auf die Prallfläche auftrifft, kann sich insbesondere daraufhin in alle Richtungen ausbreiten und zu einem Schaumvorhang verbinden.

Die Vorrichtung umfasst erfindungsgemäß ferner eine Ablaufkante, die sich quer über den Waschbereich erstreckt und von der der Schaumvorhang auf ein sich darunter im Waschbereich befindendes Fahrzeug abfließen kann. Dabei sollte der Schaumdurchsatz und die Fließfähigkeit des Schaums vorzugsweise so eingestellt werden, dass der Schaumvorhang sowohl zeitlich als auch räumlich, entlang der Ablaufkante, eine geschlossene Schaumdecke bildet.

Erfindungsgemäß ist die Ablaufkante eine untere Kante der Prallfläche.

Die Ablaufkante kann an ihren beiden Enden tiefer sein als in der Mitte. Dies dient dazu, dass beim Ausschalten der Schaumabgabevorrichtung der Schaumvorhang zu den Aussenseiten abfließen kann. Dabei vorteilhaft, wenn kurz vor Ausschalten des Schaumabgabebetriebsmodus durch Wegnehmen der Luft der Schaum in einen Wasserfall verwandelt werden kann, um das Prallblech von überschüssigem Schaum abzuspülen.

Vorzugsweise ist die Schaumabgabevorrichtung an einer höhenverstellbaren Trocknungsvorrichtung der Fahrzeugwaschanlage angeordnet. So kann ein und derselbe Antriebsmechanismus genutzt werden, um beide Vorrichtungen bei der Bewegung über ein zu reinigendes Fahrzeug hinweg dessen Höhenkontur nachzuführen, und ggf. genügt für die automatische Nachführung ein einziger Sensor, der mit Wirkung für beide Vorrichtungen die Höhenkontur des Fahrzeugs abtastet.

Die Trocknungsvorrichtung kann einen Luftkanal mit quer zur Fahrtrichtung des Trägers verteilten Luftauslässen umfassen, um im Laufe einer Bewegung über das Fahrzeug hinweg das Fahrzeug auf seiner gesamten Breite zu trocknen.

Eine Wand dieses Luftkanals kann als Prallfläche der Schaumabgabevorrichtung genutzt werden.

Auch die Ablaufkante kann an einer Wand des Luftkanals vorgesehen sein; insbesondere kann ein gleiches Stück ausgeformtes Blech in einem oberen Bereich Teil der Wand des Luftkanals sein, um die Prallfläche zu bilden, und in einem unteren Teil von der Wand des Luftkanals beabstandet sein, um die Ablaufkante zu bilden.

Die Fahrzeugwaschanlage sollte zwischen einem Schaumabgabebetriebsmodus, und einem Trocknungsbetriebsmodus umschaltbar sein. So kann im Laufe des Portalvorlaufs das Fahrzeug eingeschäumt und vorzugsweise in einem späteren Lauf getrocknet werden.

Um im Trocknungsbetriebsmodus restlichen Schaum aufzufangen und vom Waschbereich fernzuhalten, kann sich entlang der Trocknungsvorrichtung wenigstens eine Auffangrinne erstrecken. Die Auffangrinne sollte über die gesamte Breite des Waschbereichs reichen, so dass Schaumreste an einem oder beiden Enden der Auffangrinne abgeleitet werden oder zu Boden tropfen können, ohne dass sie das im Waschbereich befindliche Fahrzeug erreichen können. Eine solche Auffangrinne kann an die Prallfläche angrenzen, um Schaumreste aufzufangen und vom Fahrzeug fernzuhalten, die eventuell beim Umschalten in den Trocknungsbetriebsmodus noch an der Prallfläche haften.

Insbesondere wenn die Auffangrinne einteilig aus Flachmaterial geformt ist. kann eine Seitenwand der Rinne gleichzeitig Seitenwand der Luftauslässe sein.

Um beim Übergang in den Trocknungsbetriebsmodus das Abtropfen des Schaums auf das Fahrzeug sofort und zuverlässig zu stoppen, kann die Trocknungsvorrichtung zwischen einer Stellung, in der die Auffangrinne dem Waschbereich zugewandt ist, und einer Stellung, in der die Luftauslässe dem Waschbereich zugewandt sind, verstellbar sein.

Vorzugsweise ist die Verstellung eine Schwenkbewegung um eine Achse, vorzugsweise um eine quer zur Fahrtrichtung des Trägers orientierte Achse.

Vorteilhafterweise ist die Trocknungsvorrichtung um mehr als 360° anschlagfrei drehbar; so genügt ein nicht reversierbarer Motor, um den Übergang von der in die Schaumauftragsstellung in die Trocknungsstellung und zurück anzutreiben.

Der Winkel zwischen beiden Stellungen beträgt vorzugsweise 180°.

Der Schaumvorhang kann beleuchtet werden, z.B. um dem Fahrer des Fahrzeugs während des Waschvorgangs Ablenkung zu bieten. Dazu können Leuchtmittel, vorzugsweise verschiedenfarbige LEDs, in der Umgebung des Schaumvorhanges angeordnet sein. Alternativ oder ergänzend können Leuchtmittel vorgesehen sein, die den Schaumvorhang von außen anstrahlen. Insbesondere kann ein Projektor vorgesehen sein, um Bildfolgen oder Videosequenzen auf den Schaumvorhang zu projizieren. Diese können informativen oder unterhaltenden Inhalts sein, um den Komfort für den Fahrer während des Waschvorgangs zu erhöhen, es kann sich auch um Werbung handeln, mit der der Betreiber der Waschanlage für sich zusätzlichen Ertrag generieren kann.

Weitere Besonderheiten und Vorzüge der Erfindung ergeben sich aus der folgenden Beschreibung von bevorzugten Ausrührungsbeispielen anhand der Zeichnungen. Es zeigen:
- Fig. 1: eine schematische dreidimensionale Ansicht einer erfindungsgemäßen Fahrzeugwaschanlage;

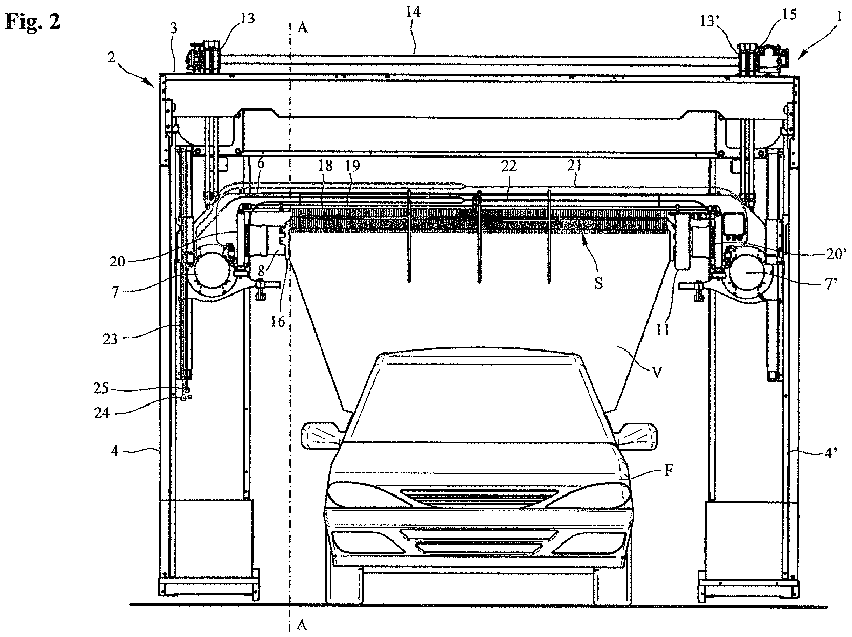

- Fig. 2: eine Vorderansicht der Fahrzeugwaschanlage aus Fig. 1;

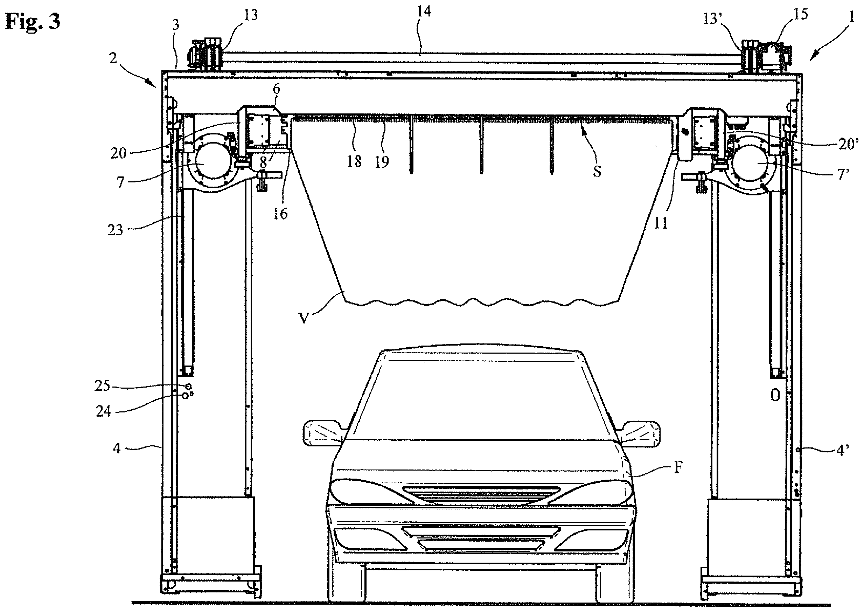

- Fig. 3: die Vorderansicht der Fahrzeugwaschanlage aus Fig. 2 mit ganz nach oben gefahrenem Dachtrockner;
- Fig. 4: eine Draufsicht auf die Fahrzeugwaschanlage aus Fig. 2 längs der Schnittlinie A-A von in Fig. 2 links;
- Fig. 5: eine detaillierte Draufsicht auf die Fahrzeugwaschanlage aus Fig. 2 längs der Schnittlinie A-A von in Fig. 2 rechts;
- Fig. 6: eine schematische dreidimensionale Ansicht des Dachtrockners aus Fig. 1;
- Fig. 7: eine Schnittansicht des Düsenkastens des Dachtrockners mit daran angeordnetem Prallblech gemäß Fig. 5 in Schaumauftragsstellung;
- Fig. 8: die Schnittansicht aus Fig. 7 mit dem Düsenkasten in Trocknungsstellung.

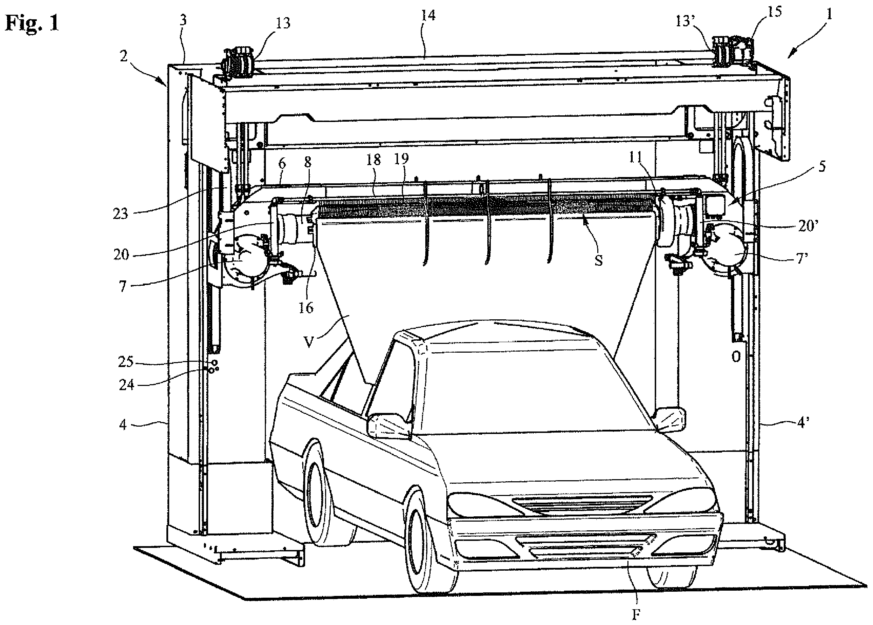

Fig. 1 zeigt eine schematische dreidimensionale Ansicht einer erfindungsgemäßen Fahrzeugwaschanlage in Form einer Portalwaschanlage 1 mit einem Waschportal 2. Das Waschportal 2 weist zwei durch eine Portaltraverse 3 miteinander verbundene, im Wesentlichen senkrecht stehende Portalsäulen 4, 4' auf. Am Waschportal 2 sind in an sich bekannter Weise nicht gezeichnete vertikale Seitenwaschbürsten und eine horizontale, höhenverfahrbare Dachwaschbürste angeordnet, welche im weiteren auch einfach als Waschbürsten bezeichnet werden.

Das Waschportal 2 ist in eine Längsrichtung L der Portalwaschanlage 1 verfahrbar, um ein in einem Waschbereich W zwischen den Portalsäulen 4, 4' stehendes Fahrzeug F zu behandeln, insbesondere zu waschen, ggf. zu polieren und zu trocknen.

Weiter ist an dem Waschportal 2 ein Dachtrockner 5 angeordnet. Der Dachtrockner 5 weist einen über die gesamte Breite des Fahrzeugs F reichenden Träger 6 auf, an dessen äußeren Seiten Radialgebläse 7,7' angeordnet sind. Die Radialgebläse 7, 7' blasen Trocknungsluft mit hohem Druck durch einen über die Breite des Fahrzeugs F reichenden Luftkanal mit quer zur Bewegungsrichtung des Waschportals 2 relativ zum Fahrzeug verteilten Luftauslässen auf, hier in Form eines Düsenkastens 8, bei dem die Luftauslässe zu einem länglichen Düsenschlitz 9 vereinigt sind, von wo die Trocknungsluft auf die Fahrzeugoberflächen geblasen wird.

Weiter ist der Dachtrockner 5 in der Höhe verfahrbar, wobei hierzu am Träger 6 außenseitig Hubriemen 12, 12' angebracht sind, welche über Wickelrollen 13, 13' auf- und abwickelbar sind. Die Wickelrollen 13, 13' sind auf einer gemeinsamen Wickelwelle 14 angeordnet, welche über einen Hubantrieb 15 angetrieben werden kann.

Um Schaum zu erzeugen, ist am Dachtrockner 5 mindestens ein Schaumerzeuger 20, 20' und ein diesen über die gesamte Breite des Trägers weiterleitenden Schaumkanal -hier als Rohr ausgebildet- vorgesehen. Eine Vielzahl von Sprühdüsen 19 ist entlang des Schaumrohres 18 verteilt. Das Rohr 18 weist bevorzugt einen Durchmesser von etwa 20 mm auf, während die Sprühdüsen 19 bevorzugt eine Öffnung von 1 bis 2 mm aufweisen. Das Schaumrohr ist so bemessen und geführt, dass aus allen Düsen der Schaum mit demselben Druck austreten kann.

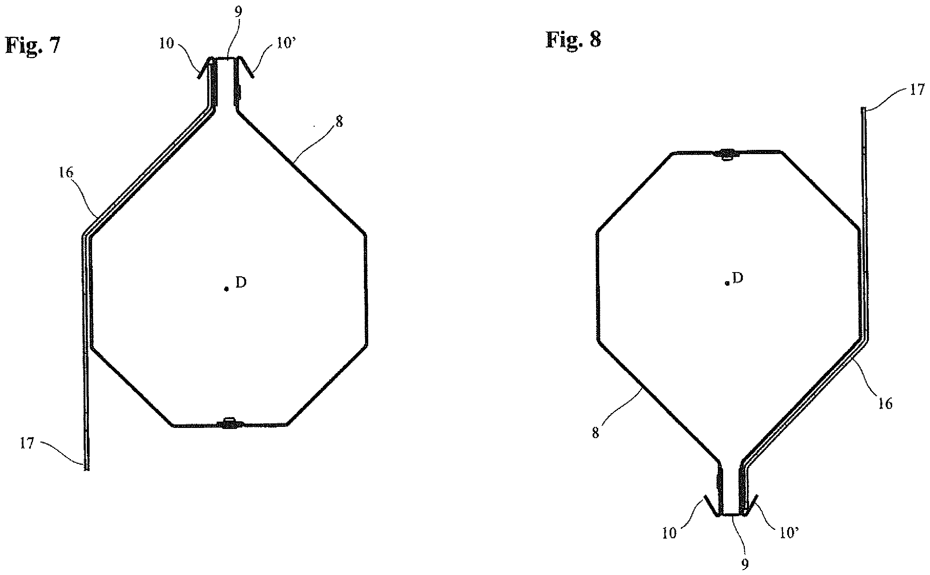

Zur Erzeugung des erfindungsgemäßen Schaumvorhangs V ist - wie in den Fig. 7 und 8 gezeigt- eine Prallfläche 16 am Düsenkasten 8 angeordnet, welche bevorzugt über die gesamte Breite des Fahrzeugs F reicht. Die Prallfläche 16 kann integraler Bestandteil eines Gehäuses des Düsenkastens 8 sein; vorzugsweise ist sie getrennt von dem Gehäuse in einen einteiligen Zuschnitt aus Flachmaterial, insbesondere Blech, ausgebildet und an dem Gehäuse montiert, der auch noch die Ablaufkante 17 und die Auffangrinne 10 mit umfasst.

Dieser Zuschnitt bildet an einem Ende die Auffangrinne 10 und schmiegt sich an zwei auf einer Seite des Düsenschlitzes 9 zu diesem nächstbenachbarte ebene Wandabschnitte des im wesentlichen achteckigen Düsenkasten 8 an und bildet dort die Prallfläche 16. Ausgehend vom zweiten dieser Wandabschnitte, der parallel zum Düsenschlitz 9 verläuft, erstreckt der Zuschnitt sich in der in Fig. 7 dargestellten Schaumabgabestellung nach unten wenigstens über den zweiten Wandabschnitt, vorzugsweise über den Düsenkasten 8, hinaus zu einer Ablaufkante 17.

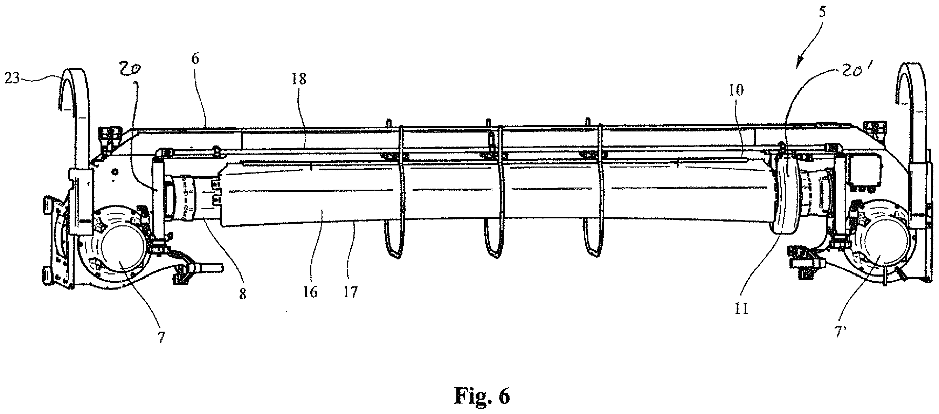

Bevorzugt kann die Ablaufkante 17 dabei einen gekrümmten, insbesondere konkaven Verlauf entlang der Trägerachse aufweisen - wie insbesondere in Fig. 6 erkennbar. Hier reichen die seitlichen äußeren Enden der Ablaufkante 17 in der Schaumabgabestellung etwas weiter nach unten als der Mittelteil der Ablaufkante 17. Dies dient dazu, dass beim Ausschalten der Schaumabgabevorrichtung der Schaumvorhang zu den Aussenseiten abfließen kann. Dabei vorteilhaft, wenn kurz vor Ausschalten des Schaumabgabebetriebsmodus durch Wegnehmen der Luft der Schaum in einen Wasserfall verwandelt werden kann» um das Prallblech von überschüssigem Schaum abzuspülen.

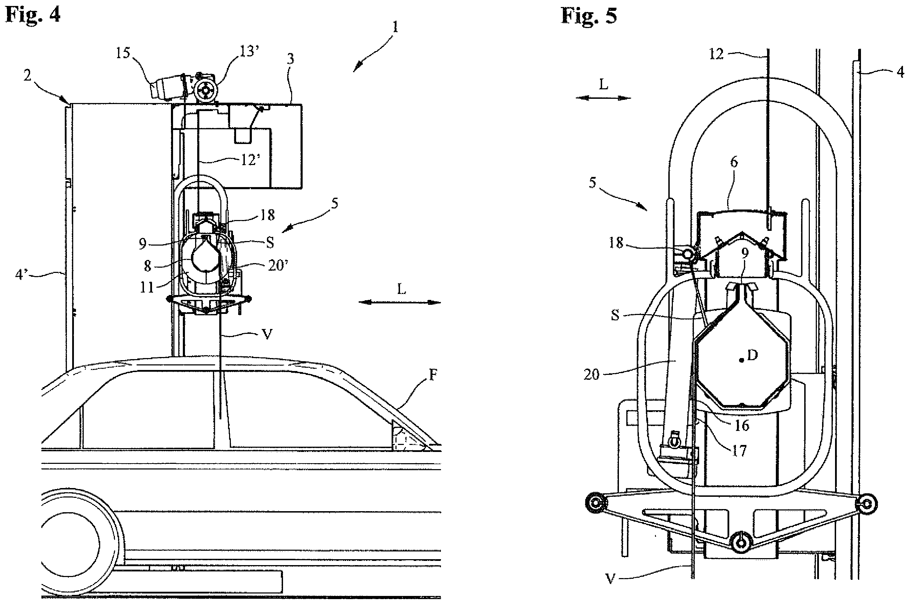

Der Schaumvorhang V wird nun dadurch erzeugt, dass von dem oberhalb der Prallfläche 16 angeordneten Schaumkanal 18 über die Vielzahl von Sprühdüsen 19 Schaum S auf die Prallfläche 16 aufgesprüht wird, wie in Fig. 5 gut erkennbar. Der Schaum S fließt dann über die Prallfläche 16 nach unten und fällt über die Ablaufkante 17 als Schaumvorhang V auf das Fahrzeug. Vom Benutzer wird der so entstehende Schaumvorhang als durchgehende Schaumfläche wahrgenommen.

Dabei wird der Schaumvorhang V mittels des höhenverstellbaren Dachtrockners 5 in einem solchen Abstand von den Fahrzeugoberflächen nachgeführt, dass keine Gefahr besteht, dass der Schaumvorhang V vor dem Auftreffen auf die Fahrzeugoberflächen auflöst oder zereisst.

Mit dieser erfindungsgemäßen Vorrichtung kann mit relativ geringem Einsatz an Schaumflüssigkeit ein stets durchgängiger, die Fahrzeugoberflächen gleichmäßig und vollständig benetzender Schaumvorhang V erzeugt werden. Hierzu kann eine zur Ansteuerung des Dachtrockners 5 an sich bekannte Konturerfassung und Kontursteuerung verwendet werden.

Um ein Abtropfen von am Dachtrockner 5 und insbesondere dem Düsenkasten 8 verbliebenen Restflüssigkeiten aus dem vorangehenden Erzeugen des Schaumvorhangs V oder auch anderen Behandlungsschritten zu verhindern, kann wie im vorliegenden Ausführungsbeispiel beschrieben vorteilhaft vorgesehen sein, dass die Ablaufkante 17 an einer von dem Düsenschlitz 9 abgewandten Seite des Düsenkastens 8 angeordnet ist. Um Schaum auf das Fahrzeug F aufzutragen, wird der Düsenkasten 8 in die in Fig. 7 gezeigte Schaumabgabestellung gedreht, in der die Ablaufkante 17 den unteren Rand des Zuschnitts der Prallfläche 16 bildet, während der Düsenschlitz 9 nach oben zeigt.

Für das Trocknen des Fahrzeugs F hingegen wird dann der Düsenkasten 8 vorliegend um 180° in die Trocknungsstellung der Fig. 8 gedreht, in der die Ablaufkantel7 oberhalb der Prallfläche 16 liegt. Dabei kann dann am Prallblech 16 und dem Düsenkasten 8 noch befindliche Restflüssigkeit in die Auffangrinne 10 ablaufen. Schaum, der eventuell noch vom Schaumkanal 18 abtropft, während sich der Düsenkasten in der Trocknungsstellung befindet, landet auf einer der Prallfläche 16 gegenüberliegenden Seite des Gehäuses des Düsenkastens 8 und gelangt von dort in die der Auffangrinne 10 gegenüberliegende Auffangrinne 10'.

Bevorzugt können die Auffangrinnen 10, 10' an ihren äußeren, nicht mehr über dem darunter stehenden Fahrzeug F befindlichen Enden offen sein, damit die gesammelte Restflüssigkeit seitwärts vom Fahrzeug F zu Boden tropfen kann. Bevorzugt können die Auffangrinnen 10 dabei leicht von ihrer Mitte zu ihren äußeren Enden hin leicht nach unten geneigt sein, um den Ablauf der darin befindlichen Restflüssigkeit nach außen zu erleichtern.

Dabei kann der Düsenkasten 8 anstelle des in den Zeichnungen gezeigten achteckigen Querschnitts einen anderen Querschnitt, beispielsweise rund oder oval aufweisen, an den die Prallfläche 16 jeweils angepasst ist, um sich eng an das Gehäuse des Düsenkastens anzuschmiegen. Auch die Ablaufkante 17 könnte statt V-förmig auch trogförmig ausgebildet sein.

Abweichend von den Figuren können der Schaumkanal 18 und die Prallfläche 16 auch an einer eigenen Hubvorrichtung angeordnet sein, welche unabhängig von dem Dachtrockner 5 in der Höhe verfahrbar ist. Die in den Figuren gezeigte Ausgestaltung weist aber den Vorteil einer kompakten, wenig zusätzliche Bauteile benötigende Ausführung aus. Ebenso kann sie einfach an bereits bestehenden Fahrzeugwaschanlagen nachgerüstet werden.

### Bezugszeichenliste

- 1: Portalwaschanlage (Fahrzeugbehandlungsanlage)
- 2: Waschportal
- 3: Portaltraverse
- 4,4': Portalsäulen
- 5: Dachtrockner
- 6: Träger
- 7, 7': Radialgebläse
- 8: Düsenkasten
- 9: Düsenschlitz
- 10: Auffangrinnen
- 11: Drehantrieb
- 12,12': Hubriemen
- 13,13': Wickelrollen für Hubriemen
- 14: Wickelwelle
- 15: Hubantrieb
- 16: Prallfläche
- 17: Abtopfkante
- 18: Schaumkanal
- 19: Sprühdüse
- 20,20': Schaumerzeuger
- 21: Druckluftleitung
- 22: Zuleitung für Schaumflüssigkeit
- 23: Energiekette
- 24: Druckluftanschluss
- 25: Anschluss für Schaumflüssigkeit

- D: Drehachse Düsenkasten
- F: Fahrzeug
- L: Längsrichtung
- S: Schaumsprühstrahlen
- V: Schaumvorhang
- W: Waschbereich

## Patentansprüche

1. Fahrzeugwaschanlage (1) zum Reinigen eines Fahrzeugs (F), mit einem entlang eines Waschbereichs verfahrbaren Träger (6) und einer Schaumabgabevorrichtung (16-19) zur Erzeugung eines quer zur Fahrtrichtung (L) des Trägers ausgedehnten Schaumvorhangs (V), wobei die Schaumabgabevorrichtung (16-19) höhenverstellbar an dem Träger (6) angeordnet ist und wenigstens einen Schaumauslass (19) umfasst, aus dem Schaum unter Druck austritt, **dadurch gekennzeichnet, dass** die Schaumabgabevorrichtung eine dem Schaumauslass (19) zugewandte Prallfläche (16) zum Auffangen und Ableiten des austretenden Schaums umfasst, wobei eine untere Kante der Prallfläche (16) eine Ablaufkante (17) ist, die sich quer über den Waschbereich erstreckt.

2. Fahrzeugwaschanlage (1) nach Anspruch 1, **dadurch gekennzeichnet, dass** die Schaumabgabevorrichtung einen Schaumkanal (18) mit mehreren quer zur Fahrtrichtung (L) des Trägers beabstandeten Schaumauslässen (19) umfasst.

3. Fahrzeugwaschanlage nach Anspruch 1 oder 2, **dadurch gekennzeichnet, dass** die Ablaufkante (17) an ihren beiden Enden tiefer ist als in der Mitte.

4. Fahrzeugwaschanlage (1) nach einem der vorhergehenden Ansprüche, **dadurch gekennzeichnet, dass** die Schaumabgabevorrichtung (16-19) an einer höhenverstellbaren Trocknungsvorrichtung (5) der Fahrzeugwaschanlage (1) angeordnet ist.

5. Fahrzeugwaschanlage (1) nach Anspruch 4, **dadurch gekennzeichnet, dass** die Trocknungsvorrichtung (5) einen Luftkanal (8) mit quer zur Fahrtrichtung (L) des Trägers verteilten Luftauslässen (9) umfasst.

6. Fahrzeugwaschanlage (1) nach Anspruch 5, soweit auf Anspruch 1 rückbezogen, **dadurch gekennzeichnet, dass** die Prallfläche (16) eine Wand des Luftkanals (8) ist.

7. Fahrzeugwaschanlage (1) nach Anspruch 5 oder 6, soweit auf Anspruch 1 rückbezogen, **dadurch gekennzeichnet, dass** die Ablaufkante (17) an einer Wand des Luftkanals (8) vorgesehen ist.

8. Fahrzeugwaschanlage nach einem der Ansprüche 4 bis 7, **dadurch gekennzeichnet, dass** sie zwischen einem Schaumabgabebetriebsmodus, in dem die Schaumabgabevorrichtung (16-19) in Betrieb ist, und einem Trocknungsbetriebsmodus umschaltbar ist, in dem die Trocknungsvorrichtung (5) in Betrieb ist, und dass sich entlang der Trocknungsvorrichtung (5) wenigstens eine Auffangrinne (10, 10') erstreckt, um im Trocknungsbetriebsmodus restlichen Schaum aufzufangen und vom Waschbereich fernzuhalten.

9. Fahrzeugwaschanlage nach Anspruch 8, **dadurch gekennzeichnet, dass** die Luftauslässe einen Schlitz (9) bilden, an dem die Auffangrinne (10, 10') entlangläuft.

10. Fahrzeugwaschanlage nach Anspruch 8 oder 9, **dadurch gekennzeichnet, dass** die Auffangrinne (10, 10') einteilig aus Flachmaterial geformt ist und eine Seitenwand der Auffangrinne (10, 10') gleichzeitig Seitenwand der Luftauslässe (9) ist.

11. Fahrzeugwaschanlage nach einem der Ansprüche 4 bis 10, **dadurch gekennzeichnet, dass** die Trocknungsvorrichtung (5) zwischen einer Stellung, in der die Ablaufkante (17) dem Waschbereich zugewandt ist, und einer Stellung, in der die Luftauslässe (9) dem Waschbereich zugewandt sind, verstellbar, insbesondere um eine Achse (D) schwenkbar, ist.

12. Fahrzeugwaschanlage nach Anspruch 11, **dadurch gekennzeichnet, dass** die Trocknungsvorrichtung (5) sich in jeder Stellung lotrecht unter einem Schaumauslass (19) der Schaumabgabevorrichtung (16-19) befindet.

## Claims

1. Vehicle washing system (1) for cleaning a vehicle (F) with a carrier (6) movable along a washing zone and a foam dispensing device (16-19) to generate a foam curtain (V) extending across the direction of travel (L) of the carrier, wherein the foam dispensing device (16-19) is arranged so as to be vertically adjustable on carrier (6) and includes at least one foam outlet (19) from which foam emerges under pressure, **characterized in that** the foam delivery device includes a baffle (16) facing the foam outlet (19) to collect and divert the emerging foam, a lower edge of the baffle (16) is a runoff edge (17) which extends across the washing zone.

2. Vehicle washing system (1) according to claim 1, **characterized in that** the foam dispensing device includes a foam channel (18) with several foam outlets (19) spaced across the direction of travel (L) of the carrier.

3. Vehicle washing system according to claim 1 or 2, **characterized in that** the runoff edge (17) is lower at both ends than in the center.

4. Vehicle washing system (1) according to one of the preceding claims, **characterized in that** the foam dispensing device (16-19) is arranged on a vertically adjustable drying device (5) of the vehicle washing system (1).

5. Vehicle washing system (1) according to claim 4, **characterized in that** the drying device (5) includes an air duct (8) with air outlets (9) distributed across the direction of travel (L) of the carrier.

6. Vehicle washing system (1) according to claim 5, insofar as it refers to claim 1, **characterized in that** the baffle (16) is a wall of the air duct (8).

7. Vehicle washing system (1) according to claim 5 or 6, insofar as it refers to claim 1, **characterized in that** the runoff edge (17) is provided on one wall of the air duct (8).

8. Vehicle washing system according to one of claims 4 to 7, **characterized in that** it is switchable between a foam dispensing mode, in which the foam dispensing device (16-19) is in operation, and a drying mode, in which the drying device (5) is in operation, and that at least one collection channel (10, 10') extends along the drying device (5) in order to collect foam remaining in the drying mode and keep it away from the washing zone.

9. Vehicle washing system according to claim 8, **characterized in that** air outlets form a slit (9) along which the collection channel (10, 10') runs.

10. Vehicle washing system according to claim 8 or 9, **characterized in that** the collection channel (10, 10') is formed in a single piece from flat material and **in that** a side wall of the collection channel (10, 10') is simultaneously the side wall of air outlets (9).

11. Vehicle washing system according to one of claims 4 to 10, **characterized in that** the drying device (5) is adjustable, especially pivotable, about an axis (D), between a position in which the runoff edge (17) faces the washing zone and a position in which the air outlets (9) face the washing zone.

12. Vehicle washing system according to claim 11, **characterized in that** the drying device (5) in each position is situated vertically beneath a foam outlet (19) of the foam dispensing device (16-19).

## Revendications

1. Installation de lavage de véhicule (1) destinée à nettoyer un véhicule (F), comprenant un élément porteur (6) qui peut être déplacé le long d'une zone de lavage et un dispositif de diffusion de mousse (16-19) destiné à générer un rideau de mousse (V) déployé transversalement par rapport au sens de déplacement (L) de l'élément porteur, le dispositif de diffusion de mousse (16-19) étant monté réglable en hauteur sur l'élément porteur (6) et comportant au moins une sortie de mousse (19) depuis laquelle de la mousse sort sous pression, **caractérisée en ce que** le dispositif de diffusion de mousse comporte une surface de rebondissement (16) faisant face à la sortie de mousse (19) pour intercepter et dériver la mousse sortante, un bord inférieur de la surface de rebondissement (16) étant un bord d'écoulement (17) qui s'étend transversalement au-dessus de la zone de lavage.

2. Installation de lavage de véhicule (1) selon la revendication 1, **caractérisée en ce que** le dispositif de diffusion de mousse comporte un canal à mousse (18) doté de plusieurs sorties de mousse (19) espacées transversalement par rapport au sens de déplacement (L) de l'élément porteur.

3. Installation de lavage de véhicule selon la revendication 1 ou 2, **caractérisée en ce que** le bord d'écoulement (17) est plus profond à ses deux extrémités qu'en son centre.

4. Installation de lavage de véhicule (1) selon l'une des revendications précédentes, **caractérisée en ce que** le dispositif de diffusion de mousse (16-19) est disposé au niveau d'un dispositif de séchage (5) réglable en hauteur de l'installation de lavage de véhicule (1).

5. Installation de lavage de véhicule (1) selon la revendication 4, **caractérisée en ce que** le dispositif de séchage (5) comporte un canal à air (8) pourvu de sorties d'air (9) distribuées transversalement par rapport au sens de déplacement (L) de l'élément porteur.

6. Installation de lavage de véhicule (1) selon la revendication 5, sous réserve de se référer à la revendication 1, **caractérisée en ce que** la surface de rebondissement (16) est une paroi du canal à air (8).

7. Installation de lavage de véhicule (1) selon la revendication 5 ou 6, sous réserve de se référer à la revendication 1, **caractérisée en ce que** le bord d'écoulement (17) se trouve au niveau d'une paroi du canal à air (8).

8. Installation de lavage de véhicule selon l'une des revendications 4 à 7, **caractérisée en ce qu'**elle peut être permutée entre un mode de fonctionnement de diffusion de mousse, dans lequel le dispositif de diffusion de mousse (16-19) est en service, et un mode de fonctionnement de séchage, dans lequel le dispositif de séchage (5) est en service, et **en ce qu'**au moins une rigole réceptrice (10, 10') s'étend le long du dispositif de séchage (5) afin de, dans le mode de fonctionnement de séchage, recueillir la mousse restante et la tenir éloignée de la zone de lavage.

9. Installation de lavage de véhicule selon la revendication 8, **caractérisée en ce que** les sorties d'air forment une fente (9) le long de laquelle court la rigole réceptrice (10, 10').

10. Installation de lavage de véhicule selon la revendication 8 ou 9, **caractérisée en ce que** la rigole réceptrice (10, 10') est formée d'un seul tenant en un matériau plat et une paroi latérale de la rigole réceptrice (10, 10') est en même temps une paroi latérale des sorties d'air (9).

11. Installation de lavage de véhicule selon l'une des revendications 4 à 10, **caractérisée en ce que** le dispositif de séchage (5) peut être positionné, notamment pivoté autour d'un axe (D), entre une position dans laquelle le bord d'écoulement (17) fait face à la zone de lavage et une position dans laquelle les sorties d'air (9) font face à la zone de lavage.

12. Installation de lavage de véhicule selon la revendication 11, **caractérisée en ce que** le dispositif de séchage (5), dans chaque position, se trouve verticalement sous une sortie de mousse (19) du dispositif de diffusion de mousse (16-19).
